# EUROPÄISCHE PATENTSCHRIFT

(11) **EP 1 353 083 B1**
(45) Veröffentlichungstag und Bekanntmachung des Hinweises auf die Patenterteilung: **12.10.2005**
(21) Anmeldenummer: 03008263.0
(22) Anmeldetag: 09.04.2003
(51) Int. Cl.: F16D 3/18

(54) **Wellenkupplung**
Shaft coupling
Accouplement d'arbre

(30) Priorität: 13.04.2002 DE 20205779 U
(43) Veröffentlichungstag der Anmeldung: 15.10.2003
(73) Patentinhaber: NIEMEYER Agratechnik GmbH, 48477 Hörstel-Riesenbeck (DE)
(72) Erfinder: Barlage, Wilfried, 49626 Berge (DE)
(74) Vertreter: Engelmann, Kristiana

(56) Entgegenhaltungen:
- DE-C- 19 827 401
- FR-A- 2 599 801
- GB-A- 110 479

## Beschreibung

Die Erfindung betrifft eine Wellenkupplung für insbesondere Antriebsstränge einer Landmaschine, gemäß dem Oberbegriff des Anspruchs 1. Eine solche Wellenkupplung ist aus EP-A-0 370 933 bekannt.

Bei einer bekannten Wellenkupplung (EP 0 370 933 B1; DE 689 16 191 T2) sind Kupplungskörper vorgesehen, die sich in ihrem Eingriffsbereich axial erstrecken und als gerade, zylindrische Zapfen ausgebildet sind. Die Schwenkachse der Gelenkverbindung bildet dabei eine Tangente am Eingriffskreis. Bei einer anderen bekannten Wellenkupplung (FR 1.251.794 A1) sind an einer Kupplungshälfte axial und an der anderen Kupplungshälfte radial ausgerichtete Kupplungskörper in Form von Fingern vorgesehen.

Die Erfindung befaßt sich mit dem Problem, eine Wellenkupplung für Antriebsstränge von insbesondere Landmaschinen zu schaffen, die bei verringertem Einbauraum eine besonders weitgehende, freie Schwenkbarkeit der Kupplungshälften ermöglicht und in allen Schwenkstellungen der Kupplungshälften zueinander einen Kupplungseingriff aufrechterhält.

Die Erfindung löst dieses Problem mit einer Wellenkupplung mit den Merkmalen des Anspruchs 1. Hinsichtlich wesentlicher weiter Ausgestaltungen wird auf die Ansprüche 2 bis 16 verwiesen.

Die erfindungsgemäße Wellenkupplung weist ein Verbindungsgelenk mit außerhalb des Eingriffskreises der Eingriffsteile verlaufender Schwenkachse auf, so daß dieser Verbindungsaufbau in Kombination mit jeweiligen Bogenformteile aufweisenden Eingriffsteilen an den beiden Kupplungshälften eine besonders kompakte und ohne axiale Zusatzbewegung weit schwenkbare Kupplungseinheit ermöglicht.

Mit den auswärts gerichteten Bogenformteilen ist in jeder Schwenkstellung der Kupplungshälften eine genaue Positionierung der relativ zueinander verlagerbaren Eingriffsteile bewirkt. Die beim Schwenkvorgang in Eingriff befindlichen Bogenformteile werden auf einer bogenförmigen Berührungslinie verlagert, so daß durch Vermeidung punktförmiger Überbelastung ein verringerter Verschleiß erreicht wird und auch unter rauhen Betriebsbedingungen eine höhere Lebensdauer der Wellenkupplung insgesamt gewährleistet ist. Diese kompakte Kupplungseinheit ist insbesondere bei geringem verfügbaren Einbauraum als schwenkstabile Gelenkkupplung für Landmaschinen geeignet.

In der Eingriffszone bilden die Bogenformteile eine nahezu spielfreie Eingriffsverbindung in sämtlichen Schwenkstellungen zwischen 0° und 180°, so daß eine optimale Zentrierung der Kupplungshälften auch bei deren Rückverlagerung aus einer Schwenkstellung in die 0°-Grundstellung gewährleistet ist. Durch eine baugleiche Konturgestaltung sämtlicher Bogenformteil beider Kupplungshälften ist der Herstellungsaufwand für derartige Wellenkupplungen vorteilhaft verringert.

Weitere Einzelheiten und vorteilhafte Ausgestaltungen der Erfindung ergeben sich aus der nachfolgenden Beschreibung der Zeichnung, in der ein Ausführungsbeispiel der Wellenkupplung veranschaulicht ist. In der Zeichnung zeigen:
- Fig. 1: eine Draufsicht auf eine Landmaschine in Form einer Heuwerbungsmaschine, die im Bereich ihres Antriebsstranges mit zwei gelenkigen Wellenkupplungen versehen ist,
- Fig. 2: eine Einzeldarstellung einer der Wellenkupplungen in Draufsicht (ähnlich Fig. 10),
- Fig. 3: eine Draufsicht der Wellenkupplung gemäß Fig. 2 in einer 90°-Schwenkstellung,
- Fig. 4: eine Stirnansicht auf die Wellenkupplung gemäß Pfeilrichtung III in Fig. 2,
- Fig. 5: eine Stirnansicht der Wellenkupplung in der 90°-Stellung gemäß Fig. 3,
- Fig. 6: eine Draufsicht der Wellenkupplung in einer zweiten Ausführung ähnlich Fig. 3,
- Fig. 7: eine Draufsicht der Wellenkupplung gemäß Fig. 6 mit in 180°-Stellung verlagerten Kupplungshälften,
- Fig. 8: eine vergrößerte Ausschnittsdarstellung der Heuwerbungsmaschine gemäß Fig. 1 im Bereich des Antriebsstranges,
- Fig. 9: eine vergrößerte Ausschnittsdarstellung der Baugruppe im Bereich einer der gelenkigen Wellenkupplungen gemäß Fig. 8 in einer 90°-Schwenkstellung,
- Fig. 10: eine Draufsicht ähnlich Fig. 9 mit in 0°-Grundstellung befindlicher Wellenkupplung, und
- Fig. 11: eine teilweise geschnittene Rückansicht der Heuwerbungsmaschine gemäß einer Linie XI-XI in Fig. 1.

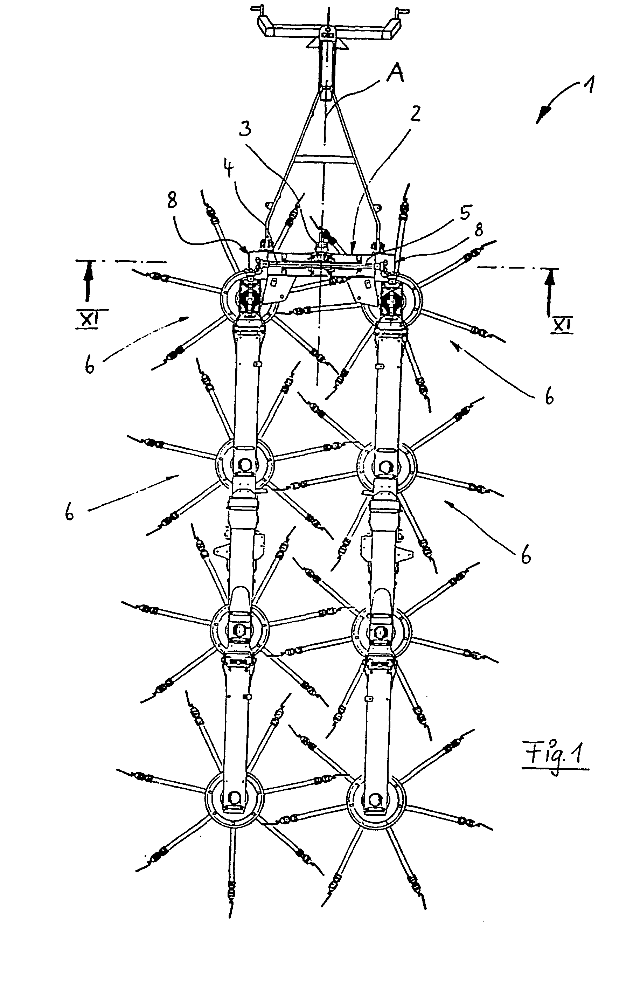

In Fig. 1 ist eine insgesamt mit 1 bezeichnete und in Form einer Heuwerbungsmaschine ausgebildete Landmaschine dargestellt, die im Bereich ihres Antriebsstranges 2 ein mit einem Schlepper o. dgl. koppelbares Getriebe 3 aufweist. Ausgehend von diesem Antriebsstrang 2 verlaufen spiegelbildlich zur Maschinenlängsmittelebene A jeweilige Wellen 4 und 5, an die jeweilige Arbeitsorgane 6 in Form von Kreiselwendern angekoppelt sind.

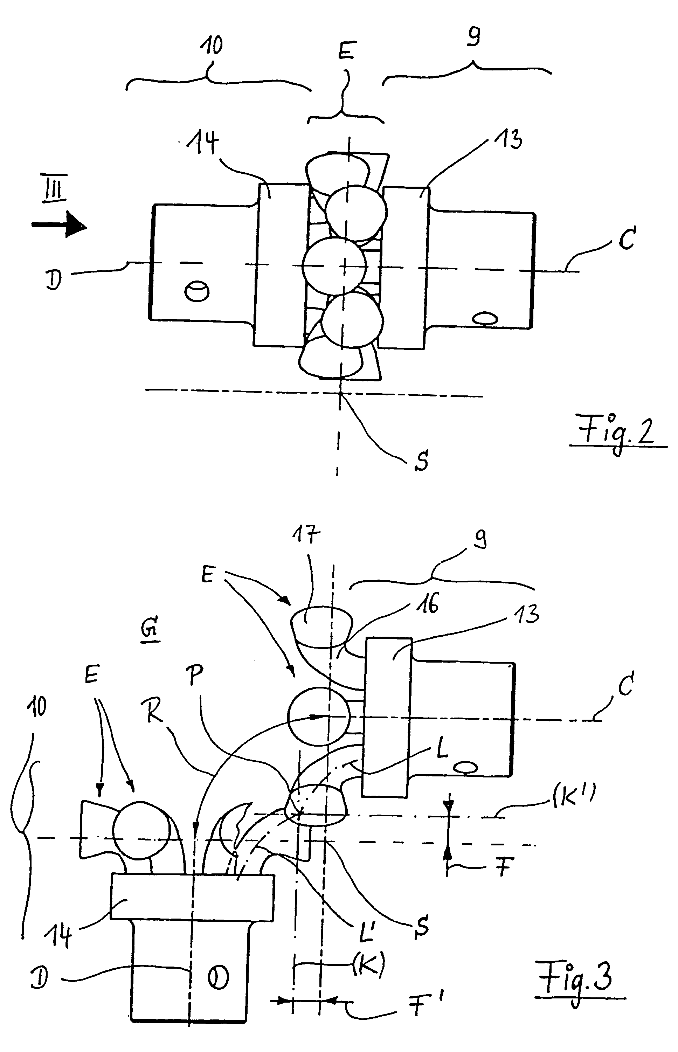

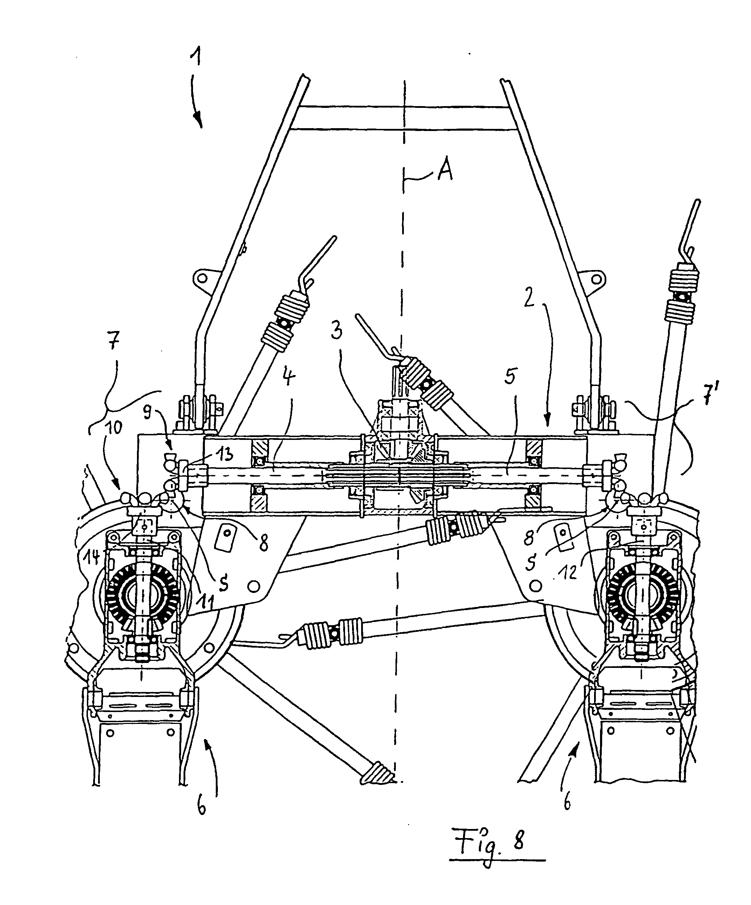

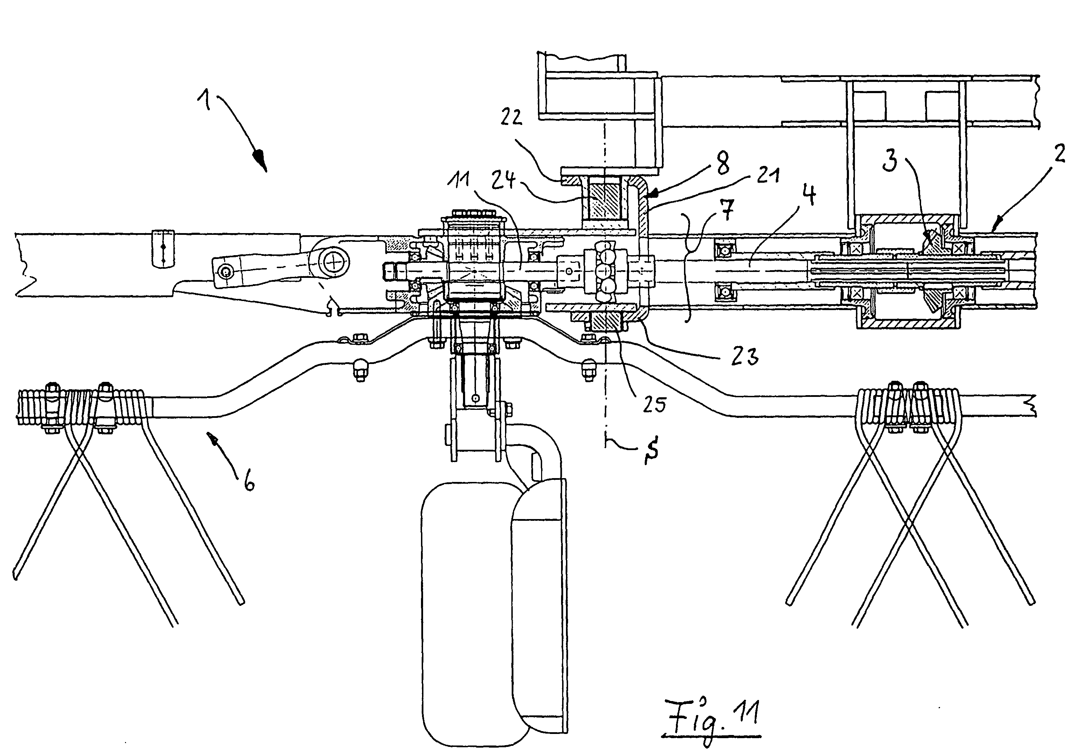

Die Vielzahl der in 0°-Grundstellung (entspricht der Arbeitsstellung gemäß Fig. 11) senkrecht zur Maschinenlängsmittelebene A ausgerichteten Arbeitsorgane 6 erfordert für den Transport der Heuwerbungsmaschine 1 im Straßenverkehr eine Verringerung der Gerätebreite, wie dies die Darstellung in Fig. 1 zeigt. Dazu sind im Bereich des Arbeitsstranges 2 vorgesehene Wellenkupplungen 7, 7' (Fig.8) als Gelenkkupplungen ausgebildet, die mit einem Verbindungsgelenk 8 (Fig. 11) zusammenwirkende Kupplungshälften 9 und 10 aufweisen (Fig. 2). Mit dieser Konstruktion ist erreicht, daß die Kupplungshälften 9 und 10 in jeweilige Winkelstellungen (Fig. 1: jeweils 90°-Stellung) um eine Schwenkachse S verschwenkbar sind und damit die Heuwerbungsmaschine 1 für einen Straßentransport geeignet ist. Denkbar ist dabei auch, daß die Arbeitsorgane 6 in nicht näher dargestellte Zwischenstellungen verbringbar sind.

Die vergrößerten Ausschnittsdarstellungen gemäß Fig. 8 bis 10 verdeutlichen, daß die zu kuppelnden Wellen 4 und 11 (linke Seite) bzw. 5 und 12 (rechte Seite) der Kupplungshälften 9 und 10 jeweils stirnseitig an ihren Enden Flanschteile 13, 14 aufweisen. Nachfolgend wird jeweils nur auf die beiden Kupplungshälften 9 und 10 im Bereich der linksseitig dargestellten Wellenkupplung 7 des Arbeitsstranges 2 Bezug genommen, da an der gegenüberliegenden Welle 5 die Bauteile der Wellenkupplung 7' entsprechend spiegelbildlich vorgesehen sind.

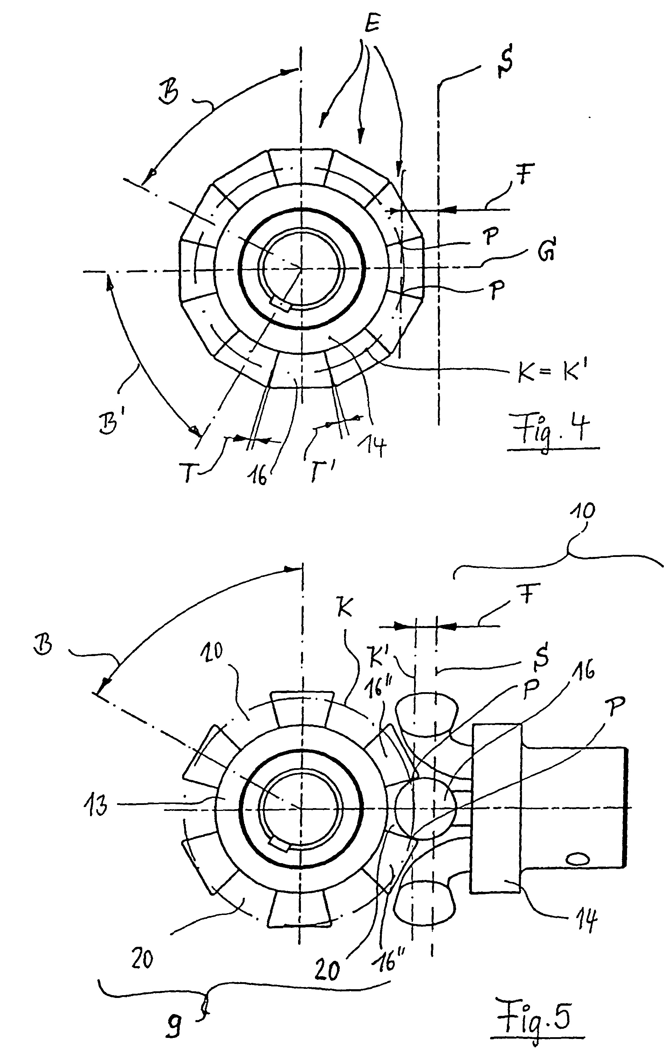

Die Kupplungshälften 9 und 10 sind mit konzentrisch in regelmäßigem Winkelabstand B (Fig. 5) um die Mittellängsachsen C und D herum angeordneten Kupplungskörpern in Form von fingerförmigen, untereinander formgleichen Eingriffsteilen E versehen, die in der Grundstellung (Fig. 2) sowie den Winkelstellungen (Fig. 3, Fig. 7) der Kupplungshälften 9, 10 eine permanente Eingriffsverbindung herstellen. In der 0°-Grundstellung (die in dem dargestellten Beispiel der Arbeitsstellung entspricht) weisen die Kupplungshälften 9, 10 eine Eingriffszone auf, in der die Punkte des gegenseitigen Eingriffs der Eingriffsteile E einen Eingriffskreis K definieren (Fig. 5). Bei Gelenkkupplungen der dargestellten Art können die Punkte P des gegenseitigen Eingriffs beim Ändern der Winkeistetlung der Kupplungshälften 9, 10 wandern.

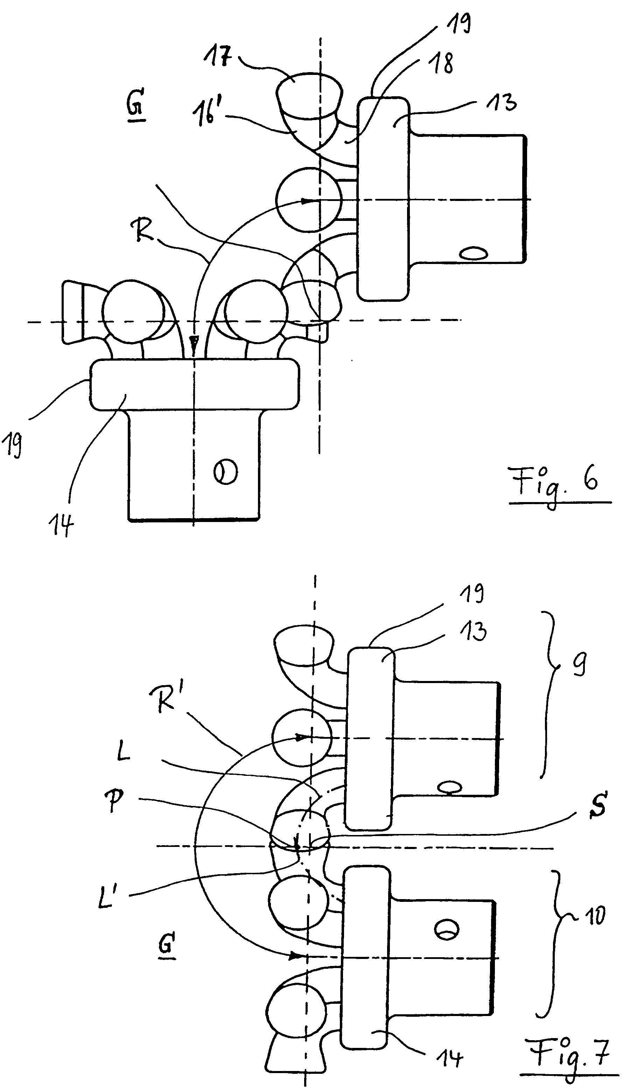

Die erfindungsgemäß ausgebildete Wellenkupplung 7 weist im Bereich des Verbindungsgelenkes 8 eine Schwenkachse S auf, die in jeder Stellung der Wellenkupplung 7 außerhalb des momentanen Eingriffskreises K verläuft (dargestellt in Fig. 5 an der Kupplungshälfte 10). Mit K' ist der zugeordnete zweite Eingriffskreis der Kupplungshälfte 9 bezeichnet. Damit ist die Lage der Schwenkachse S durch deren Abstände F und F' zum jeweiligen Eingriffskreis K und K' bestimmt (Fig. 3). Die Eingriffsteile E der erfindungsgemäßen Kupplungshälften 9, 10 sind jeweils als die Eingriffszone einnehmende, bezüglich der Mittellängsachsen C und D (Fig. 2) auswärts gerichtete Bogenformteile 16 ausgebildet. Diese Ausbildung der Eingriffsteile E ist an einem einzelnen Bogenformteil 16 in Fig. 3 beispielhaft bezeichnet, wobei dieses endseitig eine Querschnittserweiterung 17 aufweist, die sich zum jeweiligen Ende des Bogenformteiles 16 hin kegelstumpfförmig erweitert. Diese Kontur der Bogenformteile 16 kann auch wirkungsgleiche Änderungen aufweisen, wie dies nachfolgend noch in der Ausführung gemäß Fig. 6 und 7 erörtert ist.

Mit dieser Ausführung der Eingriffsteile E als Bogenformteile 16 ist erreicht, daß die Punkte P des gegenseitigen Eingriffs beim Schwenken einer der Kupplungshälften 9, 10 in der Eingriffszone eine bogenförmige Berührungslinie L, L' (Strich-Punkt-Linie in Fig. 3) definieren. Damit ist die Angriffsfläche auf den einzelnen Bogenformteilen 16 nicht auf einen Punkt begrenzt, sondern diese Angriffsfläche kann auf der jeweiligen Innenseite der Bogenkontur wandern. Damit kann die axiale Abmessung der Wellenkupplung verringert werden.

Mit dieser Eingriffsverbindung der Bogenformteile 16 ist eine weitgehend freie Schwenkbarkeit der an den Antriebsstrang 2 angekoppelten Arbeitsorgane 6 erreicht, wobei die Kupplungshälften 9 und 10 zwangsgeführt so verlagert werden, daß die Belastung im Bereich der Bogenformteile 16 bei der Schwenkung nicht punktuell erfolgt, sondern die Eingriffspunkte P auf der Berührungslinie L wandern. Gleichzeitig wird mit dieser kompakten Ausführung im Bereich der Wellenkupplung 7, 7' nur ein geringer Einbauraum innerhalb des Antriebsstranges 2 benötigt.

Die Bogenformteile 16 sind so konturiert, daß sie einen Bogen von etwa 60° bis 120°, vorzugsweise von etwa 90° (Fig. 3), einschließen. Insbesondere ist der Bogen als ein Kreisbogen ausgebildet.

In der zweiten Ausführungsform der Wellenkupplung 7 gemäß Fig. 6 und 7 sind die Bogenformteile 16' zusätzlich mit einem im wesentlichen axial vom Flanschteil 13 bzw. 14 ausgehenden Fußbereich 18 versehen. Damit ist erreicht, daß die Bogenformteile 16' in ihrem weiteren bogenförmigen Verlauf den Außenrand 19 des Flanschteiles 13, 14 so weit überragen, daß auch bis in die gemäß Fig. 7 dargestellte 180°-Schwenkstellung die permanente Eingriffsverbindung im Bereich des Punktes P erhalten bleibt und danach bei der Rückschwenkbewegung (Pfeil R; R') eine zwangsläufige Zentrierung der Kupplungshälften 9, 10 erfolgt.

Die Flanschteile 13, 14 der jeweiligen Kupplungshälften 9 und 10 sind mit vier bis neun, vorzugsweise sechs Bogenformteilen 16, 16' versehen. Dabei ist deren optimale Verteilung mit konstanten Abständen B auf den dargestellten Flanschteilen 13 und 14 dann erreicht, wenn sechs Bogenformteile vorgesehen sind. Diese ermöglichen eine optimale Abrollbewegung auf dem jeweiligen Eingriffskreis K, der bei Übertragung des Antriebsmoments in der 0°-Arbeitsstellung mit dem Eingriffskreis K' zusammenfällt. Diese 0°-Stellung ist insbesondere in Fig. 4 veranschaulicht, wobei deutlich wird, daß die Querschnittserweiterung 17 der Eingriffsteile E im Bereich der Bogenformteile 16, 16' stetig ist und dabei so bemessen wird, daß die Abstände B, B' eines Bogenformteiles 16 zu den beiden benachbarten Bogenformteilen der anderen Kupplungshälfte annähernd konstant bleibt. Mit dieser Ausbildung der Bogenformteile 16, 16' bleibt auch der Abstand T, T' (Fig. 4) der randseitig einer jeweiligen Lücke 20 zusammenwirkenden Bogenformteile (bezeichnet mit 16" in Fig. 5) innerhalb eines Teils des maximalen Schwenkbereiches (Fig. 3, Fig. 7) annähernd konstant. Damit ist ein weitgehend spielfreier Verbindungseingriff erreicht, der auch in Schwenkstellungen außerhalb der 0°-Grundstellung einen schlagfreien Eintrag einer Antriebsbewegung ermöglicht.

Für eine optimale Verlagerung im Bereich der Eingriffszone bzw. der Berührungslinie L, L' weisen die Bogenformteile 16, 16' an ihren Umfangsbereichen ballige Kontaktflächen auf. Diese Balligkeit kann auf die Eingriffszone beschränkt sein, wobei aus fertigungstechnischen Gründen jedoch die Ausführung der Bogenformteile 16, 16' mit kreisförmigen Querschnitt (wie dargestellt) besonders vorteilhaft ist. Ebenso ist denkbar, den jeweiligen Bogenformteil 16 mit weitgehend beliebig ausgeformten Formerweiterungen zu versehen, wobei diese eine zylindrische, quaderförmige, tonnenförmige o. dgl. Gestaltung aufweisen können (nicht dargestellt).

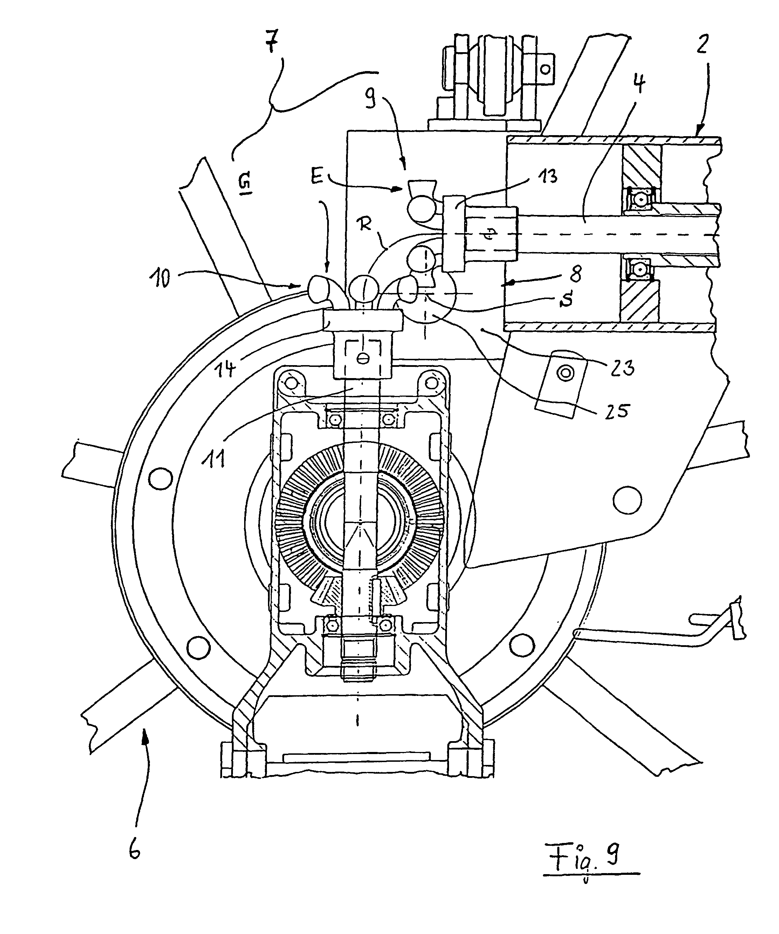

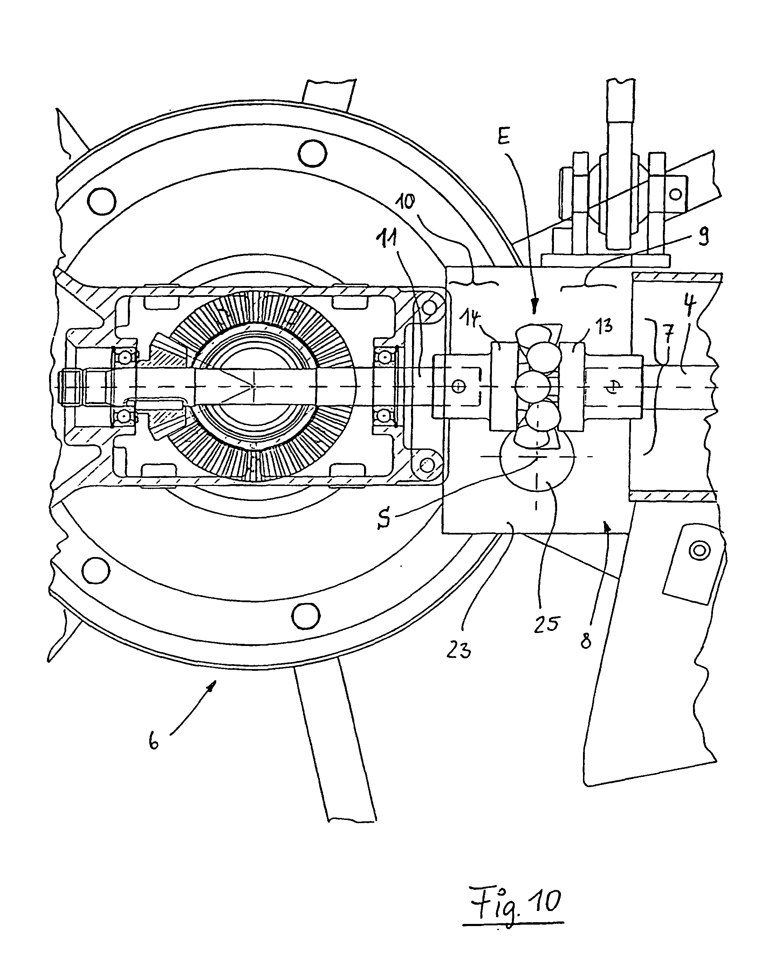

Die Zusammenschau der Fig. 9 bis 11 zeigt die Einbaulage der Wellenkupplung 7, wobei die Schwenkachse S der Gelenkverbindung 8 der beiden Kupplungshälften 9 und 10 in dieser Einbaulage annähernd vertikal verläuft und damit die Kupplungshälften 9 und 10 in einer annähernd horizontalen Schwenkebene G verlagerbar sind. In Fig. 9 ist die 90°-Schwenkstellung ähnlich Fig. 3 dargestellt und die Draufsicht gemäß Fig. 10 zeigt die in die 0°-Arbeitsstellung zurückgeführten Teile des Antriebsstranges 2 bzw. der Wellenkupplung 7. Dabei wird deutlich, daß die eine gemeinsame Antriebsachse in der 0°-Grundstellung bildenden Teil-Mittellängsachsen C und D der Kupplungshälften 9 und 10 auch in der Schwenkebene G (die in Fig. 3, 6 und 7 der Darstellungsebene entspricht) verlaufen.

Für die Festlegung der Kupplungshälften 9 und 10 in ihrer jeweils eingenommenen Schwenklage sind entsprechend dem Anwendungsfall Arretiervorrichtungen (nicht dargestellt) vorgesehen, wobei diese Schwenkendlagen auch durch nicht näher dargestellte Anschläge definiert werden können. Die Darstellung gemäß Fig. 11 zeigt die Ausbildung des Verbindungsgelenks 8, wobei dieses einen Gabelteil 21 aufweist, an dessen oberen Schenkel 22 und unteren Schenkel 23 jeweilige Stützbolzen 24 und 25 die vertikale Schwenkebene S bilden.

Für die Herstellung einer derartigen Wellenkupplung 7 hat es sich als besonders zweckmäßig gezeigt, die Teile der Kupplungshälften 9 und 10 in einer einheitlichen Bauform herzustellen, so daß eine besonders rationelle Fertigung und Lagerhaltung möglich sind. Dabei ist die Möglichkeit der Gleichteilfertigung ein besonderer Vorteil, der durch die erfindungsgemäße Ausführung der Eingriffsteile E als die Bogenformteile 16, 16', 16" erreicht wird, die mit der externen Anordnung der Schwenkachse S des Verbindungsgelenkes 8 die vorbeschriebene kompakte Wellenkupplung ergeben.

## Patentansprüche

1. Wellenkupplung mit gelenkig verbundenen Kupplungshälften (9, 10), die aus einer Grundstellung mit fluchtenden Mittellängsachsen (C, D) um eine Schwenkachse (S) des Verbindungsgelenkes (8) der Kupplungshälften (9, 10) in Winkelstellungen verschwenkbar sind, wobei jeweilige den Enden der zu kuppelnden Wellen (4, 11; 5, 12) stirnseitige zugeordnete Flanschteile (13, 14) der Kupplungshälften (9, 10) mit konzentrisch in regelmäßigem Winkelabstand (B) um die Mittellängsachsen (C, D) herum angeordneten Kupplungskörpern in Form von fingerförmigen, untereinander formgleichen Eingriffsteilen (E) versehen sind, die in der Grundstellung sowie den Winkelstellungen der Kupplungshälften (9, 10) eine permanente Eingriffsverbindung herstellen, wobei in der Grundstellung der Kupplungshälften (9, 10) die innerhalb einer Eingriffszone beim Ändern der Winkelstellung der Kupplungshälften(9, 10) wandernden Punkte (P) des gegenseitigen Eingriffs der Eingriffsteile (E) jeweils gemeinsam einen Eingriffskreis (K; K') definieren, **dadurch gekennzeichnet, daß** die Schwenkachse (S) des Verbindungsgelenkes (8) der Kupplungshälften (9, 10) außerhalb des Eingriffskreises (K) verläuft und die Eingriffsteile (E) der Kupplungshälften (9, 10) jeweils einen die Eingriffszone einnehmenden, auswärts gerichteten Bogenformteil (16; 16'; 16") aufweisen.

2. Wellenkupplung nach Anspruch 1, **dadurch gekennzeichnet, daß** der Bogenformteil (16; 16'; 16") endseitig eine Querschnittserweiterung (17) aufweist.

3. Wellenkupplung nach Anspruch 1 oder 2, **dadurch gekennzeichnet, daß** die Punkte (P) des gegenseitigen Eingriffs in der Eingriffszone eine bogenförmig Berührungslinie (L; L') auf dem Bogenformteil (16; 16'; 16") definieren.

4. Wellenkupplung nach einem der Ansprüche 1 bis 3, **dadurch gekennzeichnet, daß** die Bogenformteile (16; 16'; 16") einen Bogen von etwa 60° bis 120°, vorzugsweise etwa 90°, einschließen.

5. Wellenkupplung nach Anspruch 4, **dadurch gekennzeichnet, daß** der Bogen als Kreisbogen ausgebildet ist.

6. Wellenkupplung nach einem der Ansprüche 1 bis 5, **dadurch gekennzeichnet, daß** die Bogenformteile (16; 16'; 16") an ihrem freien Ende mit einer im wesentlichen kegelstumpfförmigen Querschnittserweiterung (17) versehen sind.

7. Wellenkupplung nach einem der Ansprüche 1 bis 5, **dadurch gekennzeichnet, daß** die Querschnittserweiterung (17) eine zylindrische, quaderförmige, tonnenförmige o. dgl. Raumform bildet.

8. Wellenkupplung nach einem der Ansprüche 1 bis 7, **dadurch gekennzeichnet, daß** die Bogenformteile (16; 16'; 16") einen axial vom Flanschteil (13, 14) ausgehenden Fußbereich (18) aufweisen und die Bogenformteile (16; 16'; 16") in ihrem weiteren bogenförmigen Verlauf den Außenrand (19) des Flanschteils (13, 14) überragen.

9. Wellenkupplung nach einem der Ansprüche 1 bis 8, **dadurch gekennzeichnet, daß** die Flanschteile (13, 14) jeder Kupplungshälfte (9, 10) mit vier bis neun, vorzugsweise sechs Bogenformteilen (16; 16'; 16") versehen sind.

10. Wellenkupplung nach einem der Ansprüche 1 bis 9, **dadurch gekennzeichnet, daß** die Querschnittserweiterung (17) der Eingriffsteile (E) im Bereich der Bogenformteile (16; 16'; 16") stetig und so bemessen ist, daß die Abstände (T, T') eines Bogenformteiles (16) zu den benachbarten Bogenformteilen (16") der anderen Kupplungshälfte (9) zumindest innerhalb eines Teils des maximalen Schwenkbereiches der Kupplungshälften (9, 10) annähernd konstant bleiben.

11. Wellenkupplung nach einem der Ansprüche 1 bis 10, **dadurch gekennzeichnet, daß** die Bogenformteile (16; 16'; 16") ballige Kontaktflächen aufweisen.

12. Wellenkupplung nach einem der Ansprüche 1 bis 11, **dadurch gekennzeichnet, daß** die Schwenkachse (S) der Gelenkverbindung (8) der beiden Kupplungshälften (9, 10) in Einbaulage der Kupplung (7; 7') annähernd vertikal verläuft und die Kupplungshälften (9, 10) in einer annähernd horizontalen Schwenkebene (G) verlagerbar sind.

13. Wellenkupplung nach einem der Ansprüche 1 bis 12, **dadurch gekennzeichnet, daß** der Schwenkwinkel (R, R') zwischen den Kupplungshälften (9, 10) bis zu etwa 180° beträgt.

14. Wellenkupplung nach einem der Ansprüche 1 bis 13, **dadurch gekennzeichnet, daß** eine Arretiervorrichtung zur Fixierung der Kupplungshälften (9, 10) in jeweils eingenommenen Schwenklagen vorgesehen ist.

15. Wellenkupplung nach einem der Ansprüche 1 bis 14, **dadurch gekennzeichnet, daß** die Schwenkendlagen durch Anschläge definiert sind.

16. Wellenkupplung nach einem der Ansprüche 1 bis 15, **dadurch gekennzeichnet, daß** die Kupplungshälften (9, 10) untereinander baugleich sind.

## Claims

1. Shaft coupling having coupling-halves (9, 10) having a jointed connection, which coupling halves (9, 10) can be pivoted, about an axis of pivot (S) of the joint (8) connecting the coupling halves (9, 10), from a basic position in which their longitudinal centre axes (C, D) are in line to angled positions,
flange parts (13, 14) at the ends of the coupling halves (9, 10), which flange parts (13, 14) are associated with the ends of respective ones of the shafts to be coupled (4, 11; 5, 12), being provided with coupling bodies, which coupling bodies are arranged at regular angular intervals (B) around the longitudinal centre axes (C, D), concentrically therewith, and are in the form of finger-like meshing parts (E) which are of the same shape as one another and which produce a permanent, meshed connection when the coupling halves (9, 10) are in their basic position and in their angled positions, the points (P) of mutual engagement of the meshing parts (E), which points (P) move within a zone of contact when the angled position of the coupling halves (9, 10) changes, together defining respective circles of contact (K; K') when the coupling halves (9, 10) are in their basic position, **characterised in that** the axis of pivot (S) of the joint (8) connecting the coupling halves (9, 10) extends outside the circle of contact (K) and the meshing parts (E) of the coupling halves (9, 10) each have an outwardly directed arcuate shaped part (16, 16', 16") which covers the zone of contact.

2. Shaft coupling according to claim 1, **characterised in that** the arcuate shaped part (16, 16', 16") has at the end an enlargement (17) of its cross-section.

3. Shaft coupling according to claim 1 or 2, **characterised in that** the points (P) of mutual engagement in the zone of contact define an arcuate line of contact (L, L') on the arcuate shaped part (16, 16', 16").

4. Shaft coupling according to one of claims 1 to 3, **characterised in that** the arcuate shaped parts (16, 16', 16") cover an arc of approximately 60° to 120° and preferably of approximately 90°.

5. Shaft coupling according to claim 4, **characterised in that** the arc is in the form of an arc of a circle.

6. Shaft coupling according to one of claims 1 to 5, **characterised in that** the arcuate shaped parts (16, 16', 16") are provided, at their free ends, with an enlargement (17) of their cross-section of substantially frusto-conical shape.

7. Shaft coupling according to one of claims 1 to 5, **characterised in that** the enlargement (17) of the cross-section is of a cylindrical, cuboid, barrel-like, or the like three-dimensional shape.

8. Shaft coupling according to one of claims 1 to 7, **characterised in that** the arcuate shaped parts (16, 16', 16") have a foot region (18) which starts, axially, from the flange part (13, 14), and the remainder of the arcuate configuration of the arcuate shaped parts (16, 16', 16") projects beyond the outer edge (19) of the flange part (13, 14).

9. Shaft coupling according to one of claims 1 to 8, **characterised in that** the flange parts (13, 14) of each coupling half (9, 10) are provided with four to nine, and preferably six, arcuate shaped parts (16, 16', 16").

10. Shaft coupling according to one of claims 1 to 9, **characterised in that** the enlargement (17) of the cross-section of the meshing parts (E) is continuous in the region of the arcuate shaped parts (16, 16', 16") and is of a size such that the distances (T, T') between one arcuate shaped part (16) and the adjacent arcuate shaped parts (16") of the other coupling half (9) remain approximately constant, at least within a part of the maximum range of pivot of the coupling halves (9, 10).

11. Shaft coupling according to one of claims 1 to 10, **characterised in that** the arcuate shaped parts (16, 16', 16") have domed contact faces.

12. Shaft coupling according to one of claims 1 to 11, **characterised in that** the axis of pivot (S) of the jointed connection (8) between the two coupling halves (9, 10) extends approximately vertically when the coupling (7, 7') is in the installed position and the coupling halves (9, 10) can be displaced in an approximately horizontal plane of pivot (G).

13. Shaft coupling according to one of claims 1 to 12, **characterised in that** the angle of pivot (R, R') between the coupling halves (9, 10) is up to approximately 180°.

14. Shaft coupling according to one of claims 1 to 13, **characterised in that** a locking arrangement is provided to fix the coupling halves (9, 10) in whatever pivoted positions are assumed at any given time.

15. Shaft coupling according to one of claims 1 to 14, **characterised in that** the end positions of pivot are defined by stops.

16. Shaft coupling according to one of claims 1 to 15, **characterised in that** the coupling halves (9, 10) are of the same construction as one another.

## Revendications

1. Accouplement d'arbre comportant des moitiés de couplage (9, 10) à liaison articulée et susceptibles de pivoter dans des positions angulaires à partir d'une position de base dans laquelle les axes longitudinaux centraux (C, D) sont alignés autour d'un axe de pivotement (S) de l'articulation de liaison (8) des moitiés de couplage (9, 10), dans lequel chacune des parties de bride (13, 14) - des moitiés de couplage (9, 10) - associées côté frontal aux extrémités des arbres (4, 11 ; 5, 12) qui assurent le couplage est munie d'organes de couplage disposés concentriquement autour des axes longitudinaux centraux (C, D) à des écarts angulaires (B) réguliers sous forme de parties d'engrènement (E), en forme de doigt et tous de même forme, qui produisent une liaison permanente par engrènement lorsque les moitiés de couplage (9, 10) sont en position de base et en positions angulaires, et
lorsque les moitiés de couplage (9, 10) sont en position de base, les points (P) - de l'engrènement mutuel des parties d'engrènement (E) - qui se déplacent à l'intérieur d'une zone d'engrènement lorsque la position angulaire des moitiés de couplage (9, 10) change, définissent ensemble à chaque fois un cercle d'engrènement (K, K'),
**caractérisé en ce que**
l'axe de pivotement (S) de l'articulation de liaison (8) des moitiés de couplage (9, 10) s'étend à l'extérieur du cercle d'engrènement (K) et les parties d'engrènement (E) des moitiés de couplage (9, 10) comportent chacune une partie arquée (16 ; 16' ; 16") qui reçoit la zone d'engrènement et est orientée vers l'extérieur.

2. Accouplement d'arbre selon la revendication 1,
**caractérisé en ce que**
la partie arquée (16 ; 16' ; 16") présente à l'extrémité un élargissement de section transversale (17).

3. Accouplement d'arbre selon la revendication 1 ou 2,
**caractérisé en ce que**
dans la zone d'engrènement les points (P) de l'engrènement mutuel définissent une ligne de contact (L ; L') arquée sur la partie arquée (16 ; 16' ; 16").

4. Accouplement d'arbre selon l'une des revendications 1 à 3,
**caractérisé en ce que**
les parties arquées (16 ; 16' ; 16") forment un arc compris entre 60° et 120°, de préférence de 90°.

5. Accouplement d'arbre selon la revendication 4,
**caractérisé en ce que**
l'arc est un arc de cercle.

6. Accouplement d'arbre selon l'une des revendications 1 à 5,
**caractérisé en ce que**
les parties arquées (16 ; 16' ; 16") sont munies à leur extrémité libre d'un élargissement de section transversale (17) pratiquement tronconique.

7. Accouplement d'arbre selon l'une des revendications 1 à 5,
**caractérisé en ce que**
l'élargissement de section transversale (17) a une forme spatiale en cylindre, en parallélépipède, en tonneau ou comparable.

8. Accouplement d'arbre selon l'une des revendications 1 à 7,
**caractérisé en ce que**
les parties arquées (16 ; 16' ; 16") comportent une zone de pied (18) qui part axialement de la partie de bride (13, 14) et, dans le reste de leur extension arquée, les parties arquées (16 ; 16' ; 16") dépassent du bord extérieur (19) de la partie de bride (13, 14).

9. Accouplement d'arbre selon l'une des revendications 1 à 8,
**caractérisé en ce que**
les parties de bride (13, 14) de chaque moitié de couplage (9, 10) sont munies de quatre à neuf parties arquées (16 ; 16' ; 16"), de préférence six.

10. Accouplement d'arbre selon l'une des revendications 1 à 9,
**caractérisé en ce que**
dans la zone des parties arquées (16 ; 16' ; 16"), l'élargissement de section transversale (17) des parties d'engrènement (E) est constant et ses dimensions sont telles que les distances (T, T') d'une partie arquée (16) aux parties arquées (16") voisines de l'autre moitié de couplage (9) restent approximativement constantes au moins à l'intérieur d'une partie de la zone maximale de pivotement des moitiés de couplage (9, 10).

11. Accouplement d'arbre selon l'une des revendications 1 à 10,
**caractérisé en ce que**
les parties arquées (16 ; 16' ; 16") ont des surfaces de contact bombées.

12. Accouplement d'arbre selon l'une des revendications 1 à 11,
**caractérisé en ce que**
lorsque le couplage (7 ; 7') est monté, l'axe de pivotement (S) de la liaison articulée (8) des deux moitiés de couplage (9, 10) est approximativement vertical et les moitiés de couplage (9, 10) peuvent se déplacer dans un plan de pivotement (G) approximativement horizontal.

13. Accouplement d'arbre selon l'une des revendications 1 à 12,
**caractérisé en ce que**
l'angle de pivotement (R, R') entre les moitiés de couplage (9, 10) peut atteindre environ 180°.

14. Accouplement d'arbre selon l'une des revendications 1 à 13,
**caractérisé en ce que**
un dispositif d'arrêt est prévu pour maintenir les moitiés de couplage (9, 10) dans chacune des positions de pivotement.

15. Accouplement d'arbre selon l'une des revendications 1 à 14,
**caractérisé en ce que**
les positions finales de pivotement sont définies par des butées.

16. Accouplement d'arbre selon l'une des revendications 1 à 15,
**caractérisé en ce que**
les moitiés de couplage (9, 10) ont une construction identique les unes aux autres.
